# EUROPÄISCHE PATENTSCHRIFT

(11) **EP 4 170 444 B1**
(45) Veröffentlichungstag und Bekanntmachung des Hinweises auf die Patenterteilung: **17.12.2025**
(21) Anmeldenummer: 22202330.1
(22) Anmeldetag: 18.10.2022
(51) Int. Cl.: G05B 19/406, G05B 19/409

(54) **VERFAHREN UND ANORDNUNG ZUR VERWALTUNG DER BENUTZER VON VERNETZTEN WERKZEUGMASCHINEN EINES MASCHINENPARKS**
METHOD AND ARRANGEMENT FOR MANAGING THE USERS OF NETWORKED MACHINE TOOLS OF A MACHINE PARK
PROCÉDÉ ET DISPOSITIF DE GESTION DES UTILISATEURS DES MACHINES-OUTILS EN RÉSEAU D'UN PARC DE MACHINES

(30) Priorität: 19.10.2021 DE 102021127148
(43) Veröffentlichungstag der Anmeldung: 26.04.2023
(73) Patentinhaber: WEILER Werkzeugmaschinen GmbH, 91448 Emskirchen (DE)
(72) Erfinder: Daum, Armin, 91364 Unterleinleiter (DE); Treczka, Kevin, 90766 Fürth (DE); Eckardt, Markus, 91617 Oberdachstetten (DE); Wäger, Markus, 91452 Wilhelmsdorf (DE)
(74) Vertreter: Mielke, Klaus

(56) Entgegenhaltungen:
- EP-A2- 2 034 378
- DE-A1- 102014 211 296
- DE-A1- 102018 210 625
- US-A1- 2021 158 587

## Beschreibung

Die Erfindung betrifft ein Verfahren zur Verwaltung der Benutzer von datentechnisch vernetzten Werkzeugmaschinen, insbesondere von Dreh- und/oder Fräsmaschinen, eines Maschinenparks, sowie eine Anordnung zur Benutzerverwaltung von Werkzeugmaschinen eines Maschinenparks, mit einem Datennetzwerk zumindest aus einer elektronischen Vorrichtung zur zentralen Benutzerverwaltung und datentechnisch verbundenen Werkzeugmaschinen.

In technischen Anlagen können eine Vielzahl von z.B. identischen oder zumindest ähnlichen Maschinen aufgebaut sein. Eine solche Anordnung kann als ein Maschinenpark bezeichnet werden. So können z.B. in einer Maschinenhalle oder auf einem Werksgelände eine Vielzahl von Werkzeugmaschinen, z.B. konventionelle Drehmaschinen und Fräsmaschinen, installiert sein. Ein Benutzer kann sich an der Steuerung einer ausgewählten Maschine anmelden und diese freischalten, um die Bearbeitung eines Werkstücks durchzuführen, z.B. durch Hantierungen mit den bedienbaren Komponenten der Maschinen. Nach Abschluss der Arbeiten kann er sich von der Maschine abmelden und diese zur Nutzung durch andere Bediener wieder freigeben. Der Bediener kann sich zu einem anderen Zeitpunkt an der gleichen oder einer anderen Maschine im Maschinenpark erneut anmelden, um die Bearbeitung eines Werkstücks zu beenden oder eine neue Bearbeitung zu beginnen.

DE 10 2007 041 768 A1 und EP 2 034 378 A2 offenbaren eine Werkzeugmaschine mit einer Zugriffssteuerung. Hierfür weist die Werkzeugmaschine eine Empfangseinrichtung auf. Darüber kann von einem mobilen Datenträger eines Nutzers, der sich an der Werkzeugmaschine anmeldet, eine Nutzeridentifikation empfangen werden. Anhand dieser werden von der Werkzeugmaschine über ein Datennetzwerk aus einer Schulungsdatenbank Berechtigungsdaten abgefragt, die dem Nutzer zugeordnet sind. Die Zugriffssteuereinrichtung gibt anhand der empfangenen Berechtigungsdaten die Betriebsfunktionen frei, zu deren Ausführung der jeweilige Nutzer berechtigt ist.

Die DE 10 2019 108 049 A1 offenbart ein System zur Steuerung des Zugriffs eines Nutzers auf Betriebsfunktionen einer technischen Anlage. Dabei können über ein lokales Datennetzwerk basierend auf einer Nutzeridentifikation die einem Nutzer zugewiesenen Zugriffsberechtigungsdaten abgerufen werden. Anhand dieser wird ermittelt, für welche Betriebsfunktionen der jeweilige Nutzer berechtigt ist, und dann nur diese bei einer Benutzung der Anlage durch den Nutzer ausgewählt werden.

Aus der DE 10 2017 116 161 A1 ist eine Benutzerschnittstelleneinrichtung in einer Prozessanlage bekannt. Dabei soll es nur autorisierten Personen möglich sein, über tragbare Rechnereinrichtungen, sog. UI-Einrichtungen, auf einzelne Komponenten der Prozessanlage, sog. Anlagenassets, z.B. Motoren, Pumpen, Verdichtern, Antrieben, Schaltanlagen zuzugreifen, um z.B. Einstellungen, Kalibrierungen, Fehlerbehebungen, Überwachungen oder Kontrollen durchzuführen. Hierfür muss sich ein Benutzer über die eigene UI-Einrichtung an dem jeweiligen Anlagenasset authentifizieren. Es können dann anhand von einer Benutzer-ID von einem Server Berechtigungen, die dem Benutzer zugewiesen sind, abgerufen werden. Die UI-Einrichtung bestimmt dann die Funktionen, die dem Benutzer auszuführen erlaubt sind. Ein Systemadministrator kann zusätzliche Berechtigungen zu einem unautorisierten Benutzer hinzufügen, sodass dieser Zugriff auf bestimmte Anlagenassets bekommt.

Bei den bekannten Systemen erfolgt die Freigabe der Benutzung von Betriebsfunktionen einer Werkzeugmaschine bzw. technischen Anlage durch eine Person anhand von personenbezogenen Berechtigungsdaten. Diese werden von einer zentralen Einrichtung, z.B. einem Server, über ein Datennetzwerk abgerufen, wenn sich die Person an der Maschine bzw. Anlage anmeldet. Abhängig vom Umfang der jeweils in den Daten enthaltenen Berechtigungen erfolgt eine Bedienungsfreigabe der technischen Betriebsmittel der jeweiligen Maschine bzw. Anlage.

Dabei tritt das Problem auf, dass die tatsächliche Qualität des Ausbildungsstands des jeweiligen Bedieners nicht bekannt ist. So können die Bediener die ihnen verliehenen Benutzungsberechtigungen auf unterschiedliche Weisen erworben haben. Den datentechnisch übermittelten Benutzungsberechtigungen ist nicht zu entnehmen, ob ein Bediener die Kenntnisse bezüglich eines zu bedienenden Betriebsmittels z.B. nur durch ein Selbststudium oder die Teilnahme an Vorführungen erworben hat. Insbesondere ist nicht sichergestellt, dass ein Bediener vorher tatsächlich ein Training an einem realen, vergleichbaren technischen Betriebsmittel absolviert hat. Bei der DE 10 2017 116 161 A1 ist sogar vorgesehen, dass ein Systemadministrator manuell zusätzliche Berechtigungen vergeben kann. Damit können z.B. in vermeintlichen Notsituationen u.U. auch Personen zur Bedienung eines technischen Betriebsmittels freigeschaltet werden, deren Qualifikation ungeklärt ist. Schließlich ist bei den bekannten Systemen nicht sichergestellt, dass die Berechtigungsstufen bezüglich der Qualität der Ausbildungsstände von allen für eine Bedienung zulassungsfähigen Personen auf einer vergleichbaren Grundlage beruhen und möglichst identisch sind.

Für eine gefahrlose Bedienung z.B. einer Drehmaschine wäre es aber von Vorteil, wenn die Fähigkeiten von allen Benutzern eines Maschinenparks vergleichbar wären und möglichst ein Qualitätsniveau aufweisen würden, welches die Bedienung auch von sicherheitskritischen Maschinenkomponenten und die Durchführung von komplexen Werkstückbearbeitungen zulässt. Andernfalls können ein höherer Ausschuss fehlerhaft bearbeiteter Werkstücke, Beschädigungen von Werkzeugen und Betriebsmitteln der Werkzeugmaschine sowohl Personengefährdungen auftreten. Eine sichere und produktive Bedienung sollte an jeder Werkzeugmaschine eines Maschinenparks unabhängig von dem jeweils daran angemeldeten Bediener möglich sein.

Der Erfindung liegt die Aufgabe zu Grunde ein Verfahren und eine auf diesem Verfahren beruhende Anordnung zur Verwaltung der Benutzer von datentechnisch vernetzten Werkzeugmaschinen eines Maschinenparks anzugeben, welche es ermöglichen, dass die für eine Bedienung der Maschinen eines Maschinenparks zulassungsfähigen Benutzer derart geschult werden können, dass diese über möglichst vergleichbare praktische Fähigkeiten auf der Grundlage eines nachvollziehbaren Befähigungsniveaus verfügen.

Die Aufgabe wird gelöst mit dem in Anspruch 1 angegebenen Verfahren zur Verwaltung der Benutzer von datentechnisch vernetzten Werkzeugmaschinen eines Maschinenparks. Die Aufgabe wird weiterhin gelöst mit der in Anspruch 5 angegebenen Anordnung zur Benutzerverwaltung von Werkzeugmaschinen eines Maschinenparks mit einem Datennetzwerk zumindest aus einer elektronischen Vorrichtung zur zentralen Benutzerverwaltung und datentechnisch verbundenen Werkzeugmaschinen. Weitere Ausgestaltungen der Erfindung sind in den Unteransprüchen angegeben.

Bei dem erfindungsgemäßen Verfahren sind in einer zentralen Benutzerverwaltung den bedienbaren Maschinenkomponenten der Werkzeugmaschinen Berechtigungsstufen datentechnisch zugeordnet. Diese ermöglichen es, die bedienbaren Maschinenkomponenten der Werkzeugmaschine insbesondere abhängig von deren Funktion und technischer Bedienungskomplexität zu strukturieren.

Bei der Erfindung umfasst der Begriff bedienbare Maschinenkomponenten sowohl manuell von einem angemeldeten Benutzer haptisch ergreifbare Maschinenteile, z.B. Schalter, Handräder und vieles mehr, als auch über eine Bedienoberfläche, z.B. ein zentrales User-Interface mit Touchscreen, auslösbare und bedienbare Funktionen, die mittels einer Bearbeitungssoftware von der Maschinensteuerung ausgeführt werden. Der Begriff bedienbare Maschinenkomponenten erstreckt sich somit auf alle Elemente einer Werkzeugmaschine, mit denen von einem Benutzer insbesondere Maschineneinstellungen vorgenommen und überprüft sowie Werkstückbearbeitungen vorbereitet und durchgeführt werden können.

Auf der Grundlage der Zuordnung von Berechtigungsstufen zu bedienbaren Maschinenkomponenten kann damit in der zentralen Benutzerverwaltung zugelassenen Benutzern der Werkzeugmaschinen des Maschinenparks eine der Berechtigungsstufen zugewiesen werden. Dies hat den Vorteil, dass damit der einem Benutzer individuell zuweisbare Benutzungsumfang abhängig von den bedienbaren Maschinenkomponenten parametriert werden kann. Die Menge der nach einer Anmeldung an einer Werkzeugmaschine bedienbaren Maschinenkomponenten kann auf diese Weise personenbezogen zur Benutzung freigegeben werden oder gesperrt bleiben.

Die erfindungsgemäße Anordnung zur Benutzerverwaltung ist vorteilhaft hierfür mit einer Berechtigungsstufendatei und einer Benutzerdatei ausgestattet. In der Berechtigungsstufendatei sind die bedienbaren Maschinenkomponenten und die diesen zugeordneten Berechtigungsstufen datentechnisch verzeichnet. In der Benutzerdatei sind die zugelassenen Benutzer für die Werkzeugmaschinen des Maschinenparks und die diesen zugewiesenen Berechtigungsstufen datentechnisch verzeichnet.

Erfindungsgemäß weist eine Werkzeugmaschine zumindest eine Bedienungsunterweisung für eine bedienbare Maschinenkomponente auf. Dabei sind Art und Umfang der Bedienungsunterweisungen an die bei einer Werkzeugmaschine jeweils zur Verfügung stehenden bedienbaren Maschinenkomponenten angepasst. Bei Werkzeugmaschinen, die über eine größere Anzahl an bedienbaren Maschinenkomponenten verfügt, können auch mehrere Bedienungsunterweisungen in einer Bibliothek zum Abruf und Ausführung durch einen angemeldeten Benutzer vorhanden sein.

Bedienungsunterweisungen können auch als Tutorials bezeichnet werden und bei Bedarf in einer Tutorialbibliothek abgelegt sein. Die erfindungsgemäße Anordnung zur Benutzerverwaltung ist hierfür mit einem Speicher ausgestattet.

Eine Bedienungsunterweisung bietet einem Benutzer eine strukturierte Abfolge von Aktionen an, die dieser zur Übung an einer Werkzeugmaschine des Maschinenparks durchführen kann. Damit kann der Benutzer den Umgang mit einer oder mehreren zusammenhängenden bedienbaren Maschinenkomponenten erlernen, auf die sich die jeweilige Bedienungsunterweisung bezieht. Vorteilhaft können diese dem Bediener an Bedienmitteln der Werkzeugmaschine, z.B. einem zentralen Touch-Display, angezeigt und vorgegeben werden. Bei Bedarf können bei der Durchführung einer Bedienungsunterweisung dem Bediener auch z.B. zusätzlich schriftliche Erläuterungen, virtuelle Animationen von Interaktionen zwischen Maschinenkomponenten, Messwerte, Zustandsveränderungen der Werkzeugmaschine auf Grund der Durchführung von Bedienhandlungen und vieles mehr angezeigt bzw. zum Abruf angeboten werden.

Erfindungsgemäß wird die vollständige und ordnungsgemäße Durchführung einer Bedienungsunterweisung, die von einem angemeldeten Benutzer aktiviert wurde, von der jeweiligen Werkzeugmaschine selbst überwacht. Dies bietet den Vorteil, dass insbesondere die tatsächliche und ordnungsgemäße Ausführung der die jeweilige Maschinenkomponente betreffenden Aktionen der Bedienungsunterweisung durch eine Person von der Werkzeugmaschine automatisch verifiziert wird. Gemäß einer weiteren Ausführung der Erfindung können einem Bediener z.B. im Falle einer Fehlbedienung von der Bedienungsunterweisung auch Hinweise gegeben werden, um die Bedienung einer Maschinenkomponente in einer richtigen Weise zu wiederholen.

Bei der Erfindung kann die Durchführung einer Bedienungsunterweisung von einer Werkzeugmaschine auf unterschiedliche Weise überwacht werden.

Bei einer vorteilhaften Ausführung der Erfindung kann hierzu z.B. die Aktivierung von Bedienmitteln der Werkzeugmaschine, die von einem angemeldeten Benutzer bei der Durchführung einer Bedienungsunterweisung manuell betätigt werden müssen, ausgewertet werden. Besonders vorteilhaft kann ein zentrales Touchdisplay an der Werkzeugmaschine als ein solches Bedienmittel zur Anzeige und Durchführung von Bedienungsunterweisungen dienen. Die Verarbeitungseinheit einer Werkzeugmaschine kann Schritt für Schritt überwachen, ob ein Benutzer alle erforderlichen Eingaben der Bedienungsunterweisungen in der gewünschten Abfolge durchgeführt hat.

Bei einer weiteren Ausführung der Erfindung kann die Werkzeugmaschine hierzu Mittel aufweisen, die eine signaltechnische Rückmeldung von einer überwachbaren Maschinenkomponente, die einer bedienbaren Maschinenkomponente zugeordnet ist, z.B. an eine Verarbeitungseinheit übertragen, wenn eine Bedienung einer überwachbaren Maschinenkomponente bei der Durchführung einer Bedienungsunterweisung detektiert wird. Eine solche zusätzliche Auswertung von insbesondere physikalischen Rückmeldesignalen, z.B. Strömen und Spannungen von Antrieben und Schaltern sowie Ausgangssignalen von Drehgebern und Linearmaßstäben, bietet eine zusätzliche Möglichkeit zur Verifizierung der Durchführung einer Bedienungsunterweisung.

Vorteilhaft können zur Verifikation der vollständigen Durchführung einer Bedienungsunterweisung durch einen angemeldeten Benutzer sowohl die Aktivierungen von Bedienmitteln, z.B. einem zentralen Touchdisplay, als auch signaltechnische Rückmeldungen von überwachbaren Maschinenkomponenten herangezogen werden.

Erfindungsgemäß meldet eine Werkzeugmaschine bzw. eine darin enthaltene Verarbeitungseinheit die vollständige Durchführung einer aktivierten Bedienungsunterweisung durch den Benutzer an die zentrale Benutzerverwaltung. Die zentrale Benutzerverwaltung kann dann die der bedienbaren Maschinenkomponente zugeordnete Berechtigungsstufe, so wie dies in der Berechtigungsstufendatei verzeichnet ist, dem Benutzer zuweisen und daraufhin die Benutzerdatei entsprechend aktualisieren.

Dies bietet den Vorteil, dass die durch eine erfolgreiche Durchführung einer Bedienungsunterweisung erworbenen Kenntnisse dem Benutzer durch eine Zuweisung der Berechtigungsstufe, die der bedienbaren Maschinenkomponente zugeordnet ist, in der Benutzerdatei gutgeschrieben wird. Bei einer Anmeldung der Person an der gleichen oder einer anderen Werkzeugmaschine des Maschinenparks kann diese im Umfang der jeweils zugewiesenen Berichtigungsstufe auf andere oder weitere Maschinenkomponenten zugreifen und gegebenenfalls umfangreichere bzw. mehr praktische Erfahrungen erfordernde Werkstückbearbeitungen durchführen.

Ein besonderer Vorteil der Erfindung wird darin gesehen, dass Bedienungsunterweisungen einheitliche, vorparametrierte Abfolgen insbesondere von Anweisungen und Bedienungen enthalten. Nach deren vollständiger Durchführung ist ein Benutzer in der ordnungsgemäßen Handhabung der zugeordneten Maschinenkomponente geschult. Bei den in einem Maschinenpark zugelassenen Benutzern, welche die gleichen Bedienungsunterweisungen absolviert haben, kann somit davon ausgegangenen werden, dass diese entsprechend dem Umfang der ihnen jeweils verliehenen Berechtigungsstufe über vergleichbare Kenntnisstände und Fähigkeiten verfügen. Zudem können die Durchführung und gegebenenfalls regelmäßige Wiederholung von Bedienungsunterweisungen pro Person automatisch dokumentiert und überwacht werden.

Die erfindungsgemäße automatische Überwachung der vollständigen Durchführung einer Bedienungsunterweisung durch die Werkzeugmaschine selbst bietet den Vorteil, dass ein nur unvollständig oder fehlerhaft durchgeführtes Tutorial nicht durch eine Person versehentlich oder vorsätzlich als ordnungsgemäß quittiert werden kann.

Bei einem bevorzugten weiteren Ausführung der Erfindung können die Berechtigungsstufen gegliedert sein. Dabei umfasst eine höhere Berichtigungsstufe zusätzlich zu der mindestens einen bedienbaren Maschinenkomponente, welche dieser höheren Berechtigungsstufe zugeordnet ist, auch bedienbare Maschinenkomponenten, die einer oder mehreren niedrigeren Berechtigungsstufen zugeordnet sind.

So kann z.B. eine "niedrige" Berechtigungsstufe einer Person nur die Bedienung von grundlegenden Maschinenkomponenten und die Durchführung einfacher Werkstückbearbeitungen ermöglichen. Mit zunehmender Praxis und der Absolvierung von entsprechenden Tutorials können einer Person "höhere" Berechtigungsstufen verliehen werden, die eine Bedienung von weiteren Maschinenkomponenten ermöglichen. Einem erfahrenen Maschinenbediener kann z.B. eine "hohe" Berechtigungsstufe zugeordnet werden, womit die Durchführung von besonders schwierigeren Werkstückbearbeitungen bzw. die Bedienung von sensibel zu handhabenden Maschinenkomponenten freigeschaltet werden.

Bei einer Aktualisierung der Benutzerdatei ordnet die zentrale Benutzerverwaltung dem angemeldeten Benutzer die Berechtigungsstufe zu, welche der bedienbaren Maschinenkomponente der durchgeführten Bedienungsunterweisung zugewiesen ist. Vorteilhaft wird dabei in der Benutzerdatei die bisherige Berechtigungsstufe durch die neue Berechtigungsstufe ersetzt, d.h. in der Regel eine niedrigere Berechtigungsstufe durch eine neue, höhere Berechtigungsstufe überschrieben. Eine solche Hochstufung hat den Vorteil, dass der Benutzer weiterhin über eine einzige, aber höherwertige Berechtigungsstufe mit erweitertem Bedienungsumfang verfügt.

Gemäß einer vorteilhaften Ausführung der Erfindung wird bei Anmeldung eines Benutzers an einer Werkzeugmaschine im Maschinenpark, insbesondere um in einem Regelbetrieb übliche Werkstückbearbeitungen vorzunehmen, die dem Benutzer zugewiesene Berechtigungsstufe aus der zentralen Benutzerverwaltung ausgelesen. Die Werkzeugmaschine schaltet daraufhin die zumindest eine bedienbare Maschinenkomponente frei, welche von der Berechtigungsstufe des Benutzers umfasst ist. Dies bietet den Vorteil, dass einem Benutzer nur Maschinenkomponenten zur Bedienung freigegeben werden, die zur Berechtigungsstufe des Benutzers konform sind. Die Definition und Vergabe von Berechtigungsstufen bietet die Möglichkeit, einem Benutzer einen Kennwert zuordnen zu können, um die Betriebsmittel im Umfang seines Ausbildungsstandes bei der Bedienung der ausgewählten Werkzeugmaschine freizuschalten. Die Bedienung von Maschinenkomponenten, die von seiner Berechtigungsstufe nicht umfasst sind, werden von der Maschinensteuerung gesperrt.

Die Erfindung, weitere vorteilhafte Ausführungen derselben und sowie eine beispielhafte Anordnung zur Benutzerverwaltung eines Maschinenparks von Werkzeugmaschinen gemäß der Erfindung werden anhand der kurz angeführten Figuren nachfolgend näher erläutert. Dabei zeigt
- Fig. 1: ein beispielhaftes Blockschaltbild einer erfindungsgemäßen Anordnung zur Benutzerverwaltung eines Maschinenparks mit datentechnisch vernetzten Werkzeugmaschinen des Maschinenparks und einer zentralen Benutzerverwaltung für zugelassene Bediener der Werkzeugmaschinen,
- Fig. 2: ein beispielhaftes Programmablaufschema einer vorteilhaften Ausführung des erfindungsgemäßen Verfahrens, welches bei der Anmeldung eines Benutzers in der Verarbeitungseinheit einer Werkzeugmaschine des Maschinenparks ausgeführt wird, um die bedienbaren Maschinenkomponenten abhängig von der Berechtigungsstufe des Benutzers freizugeben oder zu sperren,
- Fig. 3: ein beispielhaftes Programmablaufschema für ein Unterprogramm einer vorteilhaften Ausführung des erfindungsgemäßen Verfahrens, das in einer Werkzeugmaschine des Maschinenparks ausgeführt werden kann, um im Falle einer mangelnden Berechtigungsstufe des Benutzers die Durchführung einer Bedienungsunterweisung anzubieten,
- Fig. 4: ein beispielhaftes Programmablaufschema für ein Unterprogramm einer vorteilhaften Ausführung des erfindungsgemäßen Verfahrens, das in einer Werkzeugmaschine des Maschinenparks bei der Absolvierung einer Bedienungsunterweisung durch einen Benutzer ausgeführt werden kann,
- Fig. 5: einen beispielhaften Satz an Bildschirmanzeigen, die einem Benutzer zur Bearbeitung einer die "Maschinensicherheit" betreffenden Bedienungsunterweisung vorteilhaft angezeigt werden können,
- Fig. 6: einen beispielhaften Satz an Bildschirmanzeigen, die einem Benutzer zur Bearbeitung einer die "Maschinenbedienung" betreffenden Bedienungsunterweisung vorteilhaft angezeigt werden können, und
- Fig. 7: einen beispielhaften Satz an Bildschirmanzeigen, die einem Benutzer zur Bearbeitung einer die Werkstückbearbeitung "Längsdrehen manuell" betreffenden Bedienungsunterweisung vorteilhaft angezeigt werden können.

Die Erfindung und vorteilhafte weitere Ausführungen derselben werden nachfolgend am Beispiel von vorteilhaften Ausführungen erläutert.

So sind in der folgenden Tabelle 1 in den beiden linken Spalten beispielhafte, von einer Person an einer Werkzeugmaschine des Maschinenparks bedienbare Maschinenkomponenten Bx zusammengestellt. In den beiden rechten Spalten sind vorteilhaft dazugehörige überwachbare Maschinenkomponenten Mx gegenübergestellt.

Dabei zeigen die Gruppen B0, B1 ... B16 von einem Benutzer bedienbare Maschinenkomponenten und die Gruppen M1, M2 ... M17 diesen insbesondere von der Maschinensteuerung zugeordnete überwachbare Maschinenkomponenten. Derartige Maschinenkomponenten beider Gruppen sind z.B. bei einer konventionellen Drehmaschine vorhanden, z.B. bei einer konventionellen Leit- und Zugspindeldrehmaschine.

**Tabelle 1**

| Bx | bedienbare Maschinenkomponenten | Mx | überwachbare Maschinenkomponenten |
|---|---|---|---|
| B0 | Maschine einschalten | M1 | Aktivität von Stromversorgung und Steuerung abfragen |
| B1 | Futterschutzhaube schließen / öffnen | M2 | Zustand Sicherheitsschalter an Futterschutzhaube abfragen |
| B2 | Schlossmutter schließen/öffnen | M3 | Zustand Sicherheitsschalter an Schlossmutter abfragen |
| B3 | Spindelantrieb einschalten / ausschalten | M4 | Stellung des Spindelwahlschalters abfragen |
| B4 | Anschlagsachse in der z- / x- Richtung auswählen | M5 | Stellung Drehschalter (x, 0, z) für den Anschlag abfragen |
| B5 | Vorschubgeschwindigkeit in der z- / x- Richtung eingeben | M6 | eingegebene Vorschubgeschwindigkeit für Längsschlitten / Planschlitten abfragen |
| B6 | Vorschubrichtung (pos. / neg.) ändern | M7 | Stellung des Drehschalters für Vorschubrichtung abfragen |
| B7 | automatischer Längsvorschub des Bettschlittens einschalten | M8 | Status Vorschubschalter abfragen (indirekt durch Erfassung einer Veränderung der abs. Position des Bettschlittens) |
| B8 | Bettschlitten manuell verfahren | M9 | Absolutpositionen des Bettschlitten einlesen |
| B9 | Oberschlitten manuell verfahren | M10 | Absolutpositionen des Oberschlitten einlesen |
| B10 | Planschlitten manuell verfahren | M11 | Absolutpositionen des Planschlitten einlesen |
| B11 | Not-Halt auslösen | M12 | Status der Not-Halt-Überwachung abfragen |
| B12 | Werkzeug wechseln | M13 | Daten eines RFID-Tags am Werkzeug abfragen |
| B13 | Werkzeug vermessen | M14 | Dateneingaben in die Steuerung überprüfen |
| B14 | Menü "Radiendrehen" | M15 | Bedienung Menü "Radiendrehen" in Steuerung prüfen |
| B15 | Menü "Kegeldrehen" | M16 | Bedienung Menü "Kegeldrehen" in Steuerung prüfen |
| B16 | Menü "Gewindeschneiden" | M17 | Bedienung Menü "Gewindeschneiden" in Steuerung prüfen |
| ... | ... | ... | ... |

Die Tabelle 1 soll an folgendem Beispiel kurz erläutert werden. Bei einer konventionellen Drehmaschine als ein Beispiel für eine datentechnisch vernetzte Werkzeugmaschine gemäß der Erfindung kann von einem Bediener z.B. eine Futterschutzhaube geschlossen bzw. geöffnet werden. In Tabelle 1 ist dies die bedienbare Maschinenkomponente B1 mit der Bezeichnung "Futterschutzhaube schließen / öffnen". Die Futterschutzhaube deckt im geschlossenen Zustand die Maschinenspindel ab, damit der Antrieb der Spindel ohne Gefahr für einen Bediener eingeschaltet werden kann. Andernfalls bleibt der Spindelantrieb gesperrt.

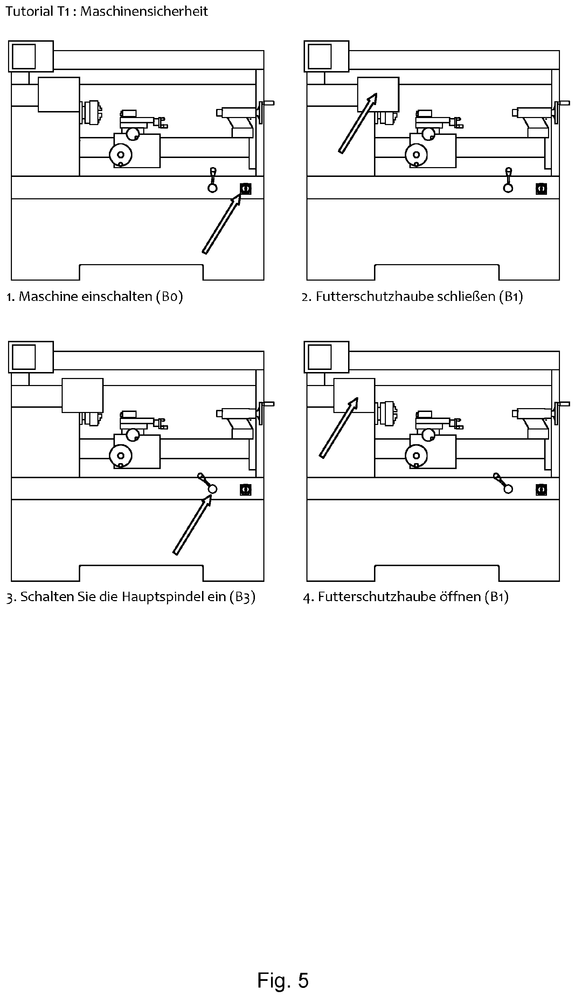

Die manuelle Betätigung der Futterschutzhaube durch einen Bediener kann z.B. von einer Verarbeitungseinheit der Werkzeugmaschine durch Abfrage des Zustands eines Sicherheitsschalters an der Futterschutzhaube erfasst werden. In Tabelle 1 ist dies die überwachbare Maschinenkomponente M2 mit der Bezeichnung "Zustand Sicherheitsschalter an Futterschutzhaube abfragen". Die erfolgreiche Schließung der Futterschutzhaube und die dadurch hervorgerufene Betätigung des Sicherheitsschalters sind Voraussetzungen für eine Inbetriebnahme des Spindelantriebs. Andererseits hat eine Unterbrechung des Sicherheitsschalters durch eine absichtliche oder versehentliche Öffnung der Futterschutzhaube eine sofortige Stillsetzung des Spindelantriebs zur Folge. Die überwachbare Maschinenkomponente M2 ermöglicht somit z.B. mittels der Verarbeitungseinheit der Drehmaschine die Feststellung, ob die Futterschutzhaube von einem Bediener tatsächlich bedient wurde. Dies wird gemäß einer weiteren Ausführung der Erfindung am Beispiel der Fig. 5, das Bildschirmanzeigen eines mit "Maschinensicherheit" bezeichneten Tutorials T1 zeigt, näher erläutert werden.

In der folgenden Tabelle 2 sind in der linken Spalte beispielhafte Berechtigungsstufen S aufgelistet, z.B. die Berechtigungsstufen 0 bis 6. Dies ermöglicht erfindungsgemäß die Freischaltung von bedienbaren Maschinenkomponenten Bx. Die vom Inhaber einer derartigen Berechtigungsstufe beispielhaft bedienbaren Maschinenkomponenten Bx sind in der rechts folgenden, mittleren Spalte aufgelistet.

So kann z.B. eine Person mit der Berechtigungsstufe S=0 zwar die "Maschine einschalten und Sicherheitselemente betätigen / aktivieren". Bedienbare Maschinenkomponenten, mit den Werkstückbearbeitungen durchgeführt werden können, bleiben aber gesperrt. Erst eine Person mit zumindest der Berechtigungsstufe S=1 kann die "Maschine einschalten mit einer Spindeldrehzahl bis max. 1000 U/min". So werden von der Verarbeitungseinheit einer Werkzeugmaschine z.B. die Bedienkomponenten B0, B1, B3, B8, B9, B10 freigeschaltet, wenn bei der Abfrage der benutzerspezifischen Berechtigungsstufe eines anmeldenden Benutzers bei der zentralen Benutzerverwaltung eine Berechtigungsstufe S=1 ausgelesen wird.

**Tabelle 2**

| S | Berechtigungsstufe | bedienbare Maschinenkomponenten Bx | Tx | Bedienungsunterweisungen ("Tutorials") |
|---|---|---|---|---|
| 0 | Maschine einschalten und Sicherheitselemente betätigen / aktivieren | B0, B1, B3, B1 | T1 | Maschinensicherheit |
| 1 | Maschine einschalten mit einer Spindeldrehzahl bis max. 1000 U/min | B0, B1, B3, B8/B9/B10 | T2 | Maschinenbedienung |
| 2 | + eingeben von Werkzeugparametern in die Steuerung | B0, B13 | T3 | Werkzeug vermessen |
| | | | T4 | Werkstück spannen |
| 3 | + einschalten der Maschine mit einer Spindeldrehzahl bis max. 2500 U/min | B0, B1, B3, B8, B10, B8 | T5 | Längsdrehen manuell |
| 4 | + aktivieren des automatischen Längsvorschubs am Bettschlitten bis max. 0,1 mm pro Spindelumdrehung | B0, B1, B3, B7 | T6 | Vorschub einschalten |
| | | B0, B1, B5, B4, B3, B14 | T7 | Radien drehen |
| 5 | + Verwendung der Menüs "Radiendrehen" + "Kegeldrehen" | B0, B1, B5, B4, B3, B15 | T8 | Kegel drehen |
| 6 | + Verwendung des Menüs "Gewindeschneiden" | B0, B1, B3, B2 | T9 | Gewinde schneiden |
| ... | ... | ... | ... | ... |

Gemäß einer weiteren Ausführung der Erfindung sind die Berechtigungsstufen in Tabelle 2 gegliedert, d.h. hierarchisch strukturiert.

So hat der Inhaber z.B. einer Berechtigungsstufe S=2 zusätzlich zu den durch die Berechtigungsstufe S=1 freigegebenen bedienbaren Maschinenkomponenten B0, B1, B3, B8, B9, B10 auch Zugriff auf die Bedienkomponente B13. Die Möglichkeit ein "Werkzeug (zu) vermessen" ist zusätzlich freigegeben. Die ist in Tabelle 2 durch ein führendes "+" Symbol gekennzeichnet.

In den beiden rechten Spalten von Tabelle 2 sind den einzelnen Berechtigungsstufen S Bedienungsunterweisungen Tx zugeordnet, auch "Tutorials" genannt. Die Vergabe einer Berechtigungsstufe an einen Benutzer setzt eine erfolgreiche Absolvierung zumindest eines, u.U. auch mehrerer, Tutorials durch einen Benutzer voraus. So ist z.B. zur Erlangung der Berechtigungsstufe S=4 die erfolgreiche, vollständige Durchführung der Bedienungsunterweisungen T6 und T7 erforderlich. Absolviert ein Benutzer nur die Bedienungsunterweisung T6, so bleibt dieser auf der Berechtigungsstufe S=3.

Bei den in der Tabelle 2 aufgeführten Berechtigungsstufen können z.B. die Berechtigungsstufen S = 0 bis 3 als "niedrige" Berechtigungsstufen, die Berechtigungsstufen S = 4 und 5 als "mittlere bzw. höhere" Berechtigungsstufen und die Berechtigungsstufen S = 6 als "hohe" Berechtigungsstufe bezeichnet werden.

Zudem ist im dargestellten Beispiel die Durchführung der Tutorials T1 "Maschinensicherheit" und T2 "Maschinenbedienung" Voraussetzung für die Vergabe der niedrigsten Berechtigungsstufe 1, welche eine aktive Bedienung der Drehmaschine zur Werkstückbearbeitung ermöglicht. Hierzu muss ein Bediener bei der Durchführung des Tutorials T1 die Maschinenkomponenten B0, B1, B3, B1 und bei der Durchführung des Tutorials T2 die Maschinenkomponenten B0, B1, B8, B9, B10, B3 bedient haben.

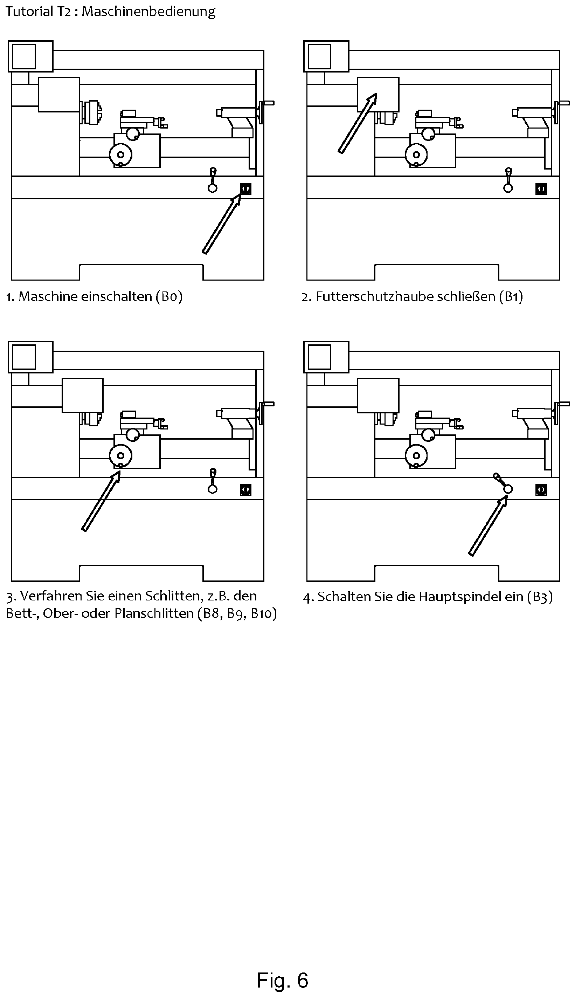

Diese kann z.B. durch Auswertung von signaltechnischen Rückmeldungen zugeordneter überwachbarer Maschinenkomponenten Mx erfolgen. Dies wird nachfolgend den Beispielen der Fig. 5, die beispielhafte Bildschirmanzeigen des Tutorials T1 "Maschinensicherheit" zeigt, und der Fig. 6, die beispielhafte Bildschirmanzeigen des Tutorials T2 "Maschinenbedienung" zeigt, noch näher erläutert werden.

Bei einer weiteren Ausführung der Erfindung können auch alternativ oder additiv zu signaltechnischen Rückmeldungen die Aktivierungen von Bedienmitteln der Werkzeugmaschine durch den Benutzer zur Überwachung der ordnungsgemäßen Durchführung einer Bedienungsanweisung hinzugezogen werden. Ein solches beispielhaftes Bedienmittel kann z.B. ein zentrales Touchdisplay an der Werkzeugmaschine sein. Dieses kann genutzt werden, um einem Benutzer alle Schritte zur Durchführung eines Tutorials anzuzeigen und diesen Schritt für Schritt zu leiten. In aller Regel muss dabei der Bediener Eingaben am Touchdisplay vornehmen, z.B. nachfolgende Schritte im Tutorial aktivieren, Eingaben oder Bedienhandlungen quittieren, virtuelle Vorgaben für eine Werkstückbearbeitung vornehmen, Erläuterungen aufrufen, und vieles mehr. Diese Aktivierungen können zur Überwachung der vollständigen Durchführung einer Bedienungsunterweisung z.B. von der Verarbeitungseinheit einer Werkzeugmaschine erfasst und systematisch protokolliert werden.

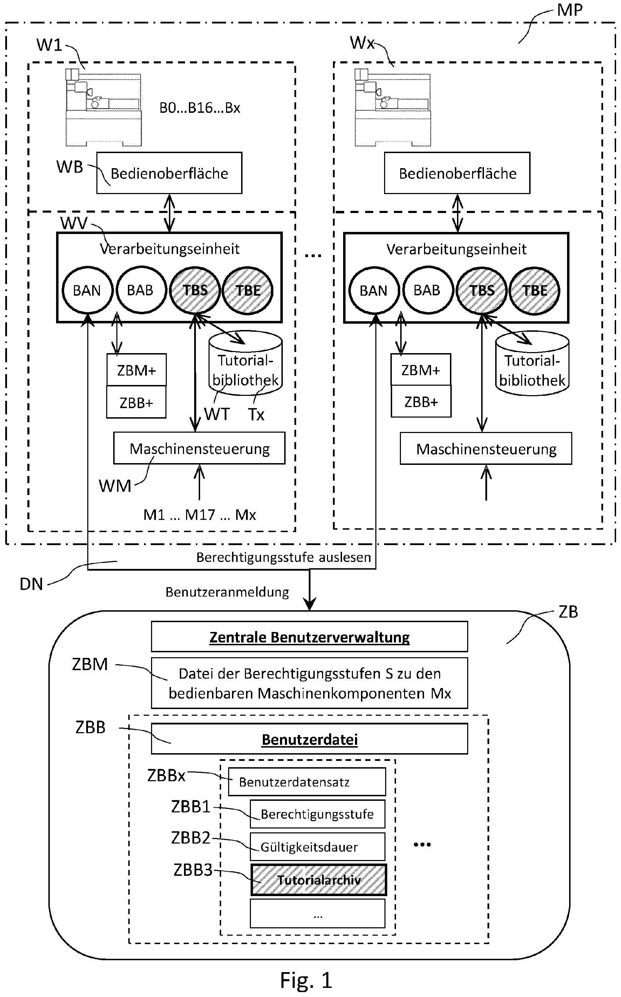

Fig. 1 zeigt ein beispielhaftes Blockschaltbild einer erfindungsgemäßen Anordnung zur Benutzerverwaltung eines Maschinenparks MP mit datentechnisch vernetzten Werkzeugmaschinen W1...Wx, z.B. konventionellen Drehmaschinen, und einer zentralen Benutzerverwaltung ZB für zugelassene Bediener der Werkzeugmaschinen. Die Maschinen sind über ein Datennetzwerk DN untereinander und zumindest mit einer zentralen Benutzerverwaltung ZB für die Maschinen des Maschinenparks verbunden. Eine mögliche Ausführung einer Maschine wird am Beispiel der Werkzeugmaschine W1 exemplarisch erläutert. Die weiteren Maschinen Wx sind vorteilhaft entsprechend aufgebaut, so dass in Fig. 1 dort keine weiteren Bezugszeichen eingetragen sind.

Die symbolisch dargestellte Drehmaschine W1 stellt einem Benutzer eine Vielzahl von bedienbaren Maschinenkomponenten B0 ... B16 ... Bx zur Verfügung. In der obigen Tabelle 1 sind solche Maschinenkomponenten beispielhaft zusammengestellt. Möchte ein Benutzer eine Bedienung der Maschine W1 beginnen, so kann er sich über eine beispielhafte Bedienoberfläche WB an der Verarbeitungseinheit WV anmelden. Dabei kann es sich um eine berührungssensitive Bildschirmanzeige handeln, z.B. ein Touchpanel. Darüber können an die Maschinensteuerung WM auch weitere Daten eingegeben werden, z.B. Werkstück- und Werkzeugdaten.

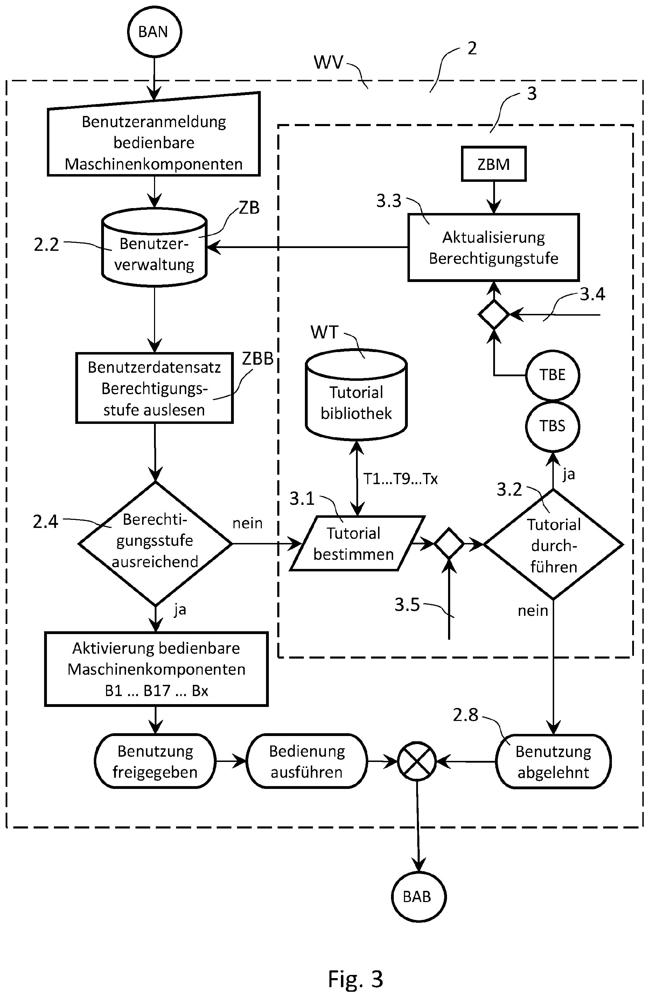

In Fig. 1 kann beispielhaft eine "Benutzeranmeldung" BAN gestartet werden. Ein beispielhaftes Programmablaufschema hierfür wird nachfolgend am Beispiel der Fig. 3 noch näher erläutert werden. Dieses greift zur Benutzeranmeldung über das Datennetzwerk DN auf die "Zentrale Benutzerverwaltung" ZB zu.

Die "Zentrale Benutzerverwaltung" ZB kann als eine separate elektronische Vorrichtung im Netzwerk DN ausgeführt sein, z.B. als ein separater Server. Dort ist eine Datei ZBM, auch Berechtigungsstufendatei genannt, vorhanden, in der z.B. entsprechend der Tabelle 2 Berechtigungsstufen S sowie diesen zugeordnete, bedienbare Maschinenkomponenten verzeichnet sind. Die "Zentrale Benutzerverwaltung" ZB enthält weiterhin eine Datei ZBB, auch Benutzerdatei genannt, in der alle zugelassenen Benutzer und deren Benutzerdatensätze gespeichert sind. Fig. 1 zeigt einen beispielhaften Benutzerdatensatz ZBBx. Dieser enthält insbesondere einen Speicher ZBB1 mit der dem jeweiligen Benutzer aktuell zugewiesenen Berechtigungsstufe. Bei einer weiteren Ausführung können zusätzliche Speicher vorhanden sein, z.B. ein Speicher ZBB2 mit der aktuellen Gültigkeitsdauer der aktuellen Berechtigungsstufe des Benutzers und ein Speicher ZBB3 mit einem Verzeichnis der vom Benutzer absolvierten Bedienungsunterweisungen, auch kurz "Tutorialarchiv" genannt.

Für einen Normalbetrieb einer der vernetzten Werkzugmaschinen des Maschinenparks, d.h. für eine Aktivierung der Maschine z.B. zur Durchführung von regulären Werkstückbearbeitungen, liest die Verarbeitungseinheit WV bei einer Benutzeranmeldung die z.B. in einem Speicher ZBB1 der Benutzerdatei ZBB verzeichnete und dem Benutzer aktuell zugewiesene Berechtigungsstufe aus, d.h. diese wird von der Benutzerdatei in der zentralen Benutzerverwaltung datentechnisch abgefragt. Daraufhin schaltet die Werkzeugmaschine die zumindest eine bedienbare Maschinenkomponenten frei, die von der dem angemeldeten Benutzer zugewiesenen Berechtigungsstufe umfasst ist. Hat ein Bediener die Benutzung beendet oder wurde der Benutzer von der zentralen Benutzeranmeldung z.B. auf Grund einer unzureichenden Berechtigungsstufe abgelehnt, so wird von der Verarbeitungseinheit eine "Benutzerabmeldung" BAB durchgeführt. Es können sich nun andere, als Benutzer im Maschinenpark zugelassene Personen an der Maschine W1 anmelden.

Gemäß einer weiteren, im Beispiel der Fig. 1 bereits dargestellten Ausführungsform der Erfindung können Kopien ZBB+ und ZBM+ der Benutzerdatei ZBB und der Berechtigungsstufendatei ZBM von der zentralen Benutzerverwaltung zusätzlich lokal in den Werkzeugmaschinen W1 ... Wx des Maschinenparks gespeichert werden. Dies ermöglicht einen schnelleren Datenzugriff auf die Inhalte dieser Dateien insbesondere durch Verarbeitungseinheiten der Werkzeugmaschinen und z.B. eine schnellere Durchführung von Tutorials.

So kann hierfür die einem an einer Werkzeugmaschine angemeldeten Benutzer zugewiesene Berechtigungsstufe S aus der Kopie der Benutzerdatei ZBB+ schnell ausgelesen werden, und muss nicht aufwendig in jedem Einzelfall über das Datennetzwerk DN von der zentralen Benutzerverwaltung abgefragt werden. Entsprechend können die bedienbaren Maschinenkomponenten Bx der Werkzeugmaschine, die von der einem angemeldeten Benutzer zugewiesenen Berechtigungsstufe S umfasst sind, aus der Kopie der Berechtigungsstufendatei ZBM+ schnell ausgelesen und freigeschaltet werden, und müssen vorher nicht aufwendig in jedem Einzelfall über das Datennetzwerk DN von der zentralen Benutzerverwaltung abgefragt werden.

Ergeben sich Änderungen in den Dateien ZBB und ZBM, d.h. erwirbt z.B. ein Benutzer durch Absolvierung eines Tutorials eine andere bzw. höherwertige Berechtigungsstufe, so kann die zentrale Benutzerverwaltung ZB die Kopien der Benutzerdateien ZBB+ auf den Werkzeugmaschinen Wx des Maschinenparks MP durch die aktualisierte Benutzerdatei ZBB überschreiben. In der gleichen Weise kann die zentrale Benutzerverwaltung ZB die Kopien der Berechtigungsstufendatei ZBM+ auf den Werkzeugmaschinen Wx des Maschinenparks MP durch eine aktualisierte Berechtigungsstufendatei ZBB überschreiben.

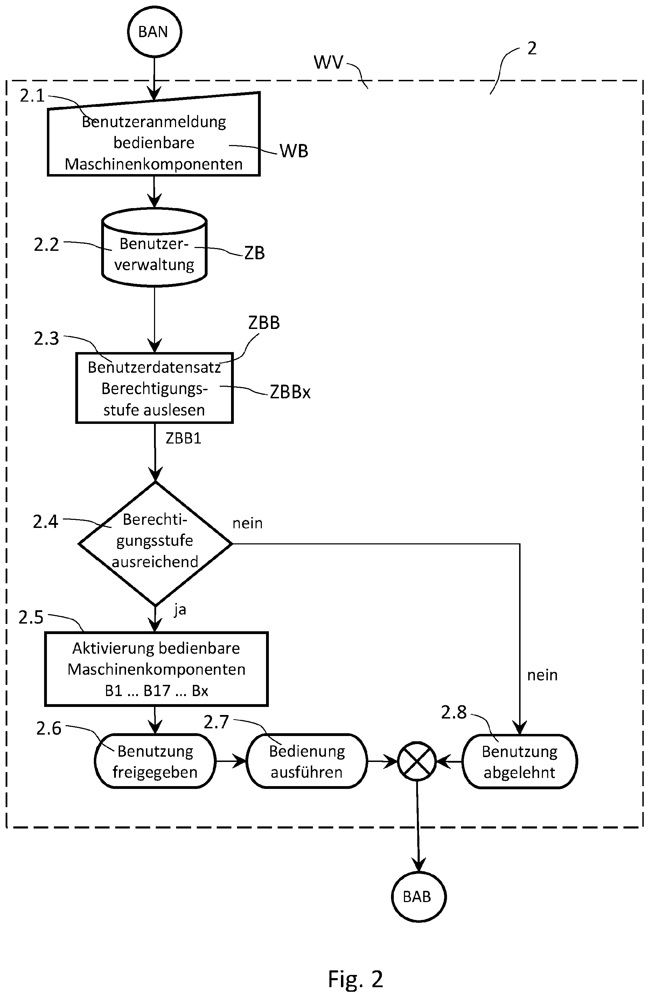

Fig. 2 zeigt ein beispielhaftes Programmablaufschema 2 für einen solchen Normalbetrieb. Es beginnt bei der Benutzeranmeldung BAN und endet mit einer Benutzerabmeldung BAB. Es umfasst die beispielhaften Programmschritte 2.1 bis 2.8. Im ersten Programmschritt 2.1 wird die Anmeldung eines Benutzers und der Umfang der von diesem angeforderten Freigabe bedienbarer Maschinenkomponenten entgegengenommen. Im folgenden Programmschritt 2.2 wird auf die zentrale Benutzerverwaltung ZB zugegriffen und durch den Programmschritt 2.3 die dem Benutzer aktuell zugeordnete Berechtigungsstufe S z.B. aus einem Speicher ZBB1 des zugeordneten Benutzerdatensatzes ZBBx der Benutzerdatei ZBB ausgelesen. Im Programmschritt 2.4 wird überprüft, ob die dem Benutzer zugewiesene Berechtigungsstufe für die im Programmschritt 2.1 angeforderten Freigaben ausreichend ist. Ist dies der Fall, so werden im Programmschritt 2.5 die der zugewiesenen Berechtigungsstufe zugeordneten, bedienbaren Maschinenkomponenten Bx aktiviert, z.B. eine der Maschinenkomponenten B1...B16, und im Programmschritt 2.6 freigegeben. Nach Ausführung der Bedienungen im Programmschritt 2.7 kann sich der Benutzer über die Routine BAB abmelden und die Maschinen zur Benutzung durch andere Personen freigeben. Ergibt allerdings die Überprüfung im Programmschritt 2.4, dass die angeforderten Bedienungen auf Grund der zu geringen Wertigkeit der vorliegenden Berechtigungsstufe S nicht ausgeführt werden können, so wird die Benutzung im Programmschritt 2.8 abgelehnt und ebenfalls die Abmeldungsroutine BAB eingeleitet. Bei einer weiteren Ausführung kann einem Benutzer in einem solchen Fall die Durchführung von Tutorials angeboten werden. Dieser hat damit die Möglichkeit die Berechtigungsstufe zu aktualisieren, insbesondere so hochzustufen, dass er die Berechtigung zum Zugriff auf bislang gesperrte bedienbare Maschinenkomponenten erhält.

Die Erfindung ermöglicht einem zugelassenen Benutzer, wie dies vorstehend bereits im Detail erläutert wurde, mit dem in Anspruch 1 angegebenen Verfahren und der im nebengeordneten Anspruch 5 angegebenen Anordnung zur Benutzerverwaltung direkt an einer der Werkzeugmaschinen des Maschinenparks Bedienungsunterweisungen maschinengeführt so durchzuführen, dass danach eine Aktualisierung, insbesondere Hochstufung, der neuen Berechtigungsstufe von der Werkzeugmaschine direkt, d.h. automatisiert, veranlasst werden kann. Erfindungsgemäß wird hierzu die aktualisierte Berechtigungsstufe dem Benutzer in der maschinenparkübergreifenden Benutzerdatei der zentralen Benutzerverwaltung gutgeschrieben. Diese steht dem Benutzer dann an anderen, ausgewählten Werkzeugmaschinen für eine Anmeldung und Freischaltung bedienbarer Maschinenkomponenten zur Verfügung, die von der dem angemeldeten Benutzer nun zugewiesenen Berechtigungsstufe umfasst sind.

Erfindungsgemäß werden einem Benutzer Bedienungsunterweisungen, auch Tutorials genannt, zur Durchführung angeboten. Die Tutorials sind auf bedienbare Maschinenkomponenten gerichtet. Die Bearbeitung von derartigen maschinengeführten Bedienungsunterweisungen verbessern die Fähigkeiten eines noch nicht ausreichend erfahrenen Benutzers, um eine Werkzeugmaschine sicher zu führen und fehlerfreie Werkstückbearbeitungen durchzuführen. Der besondere Vorteil der Erfindung wird darin gesehen, dass die Durchführung eines Tutorials von einer vernetzten Werkzeugmaschine selbst automatisch überwacht und nach ordnungsgemäßem Abschluss direkt an die zentrale Benutzerverwaltung gemeldet und dort archiviert wird.

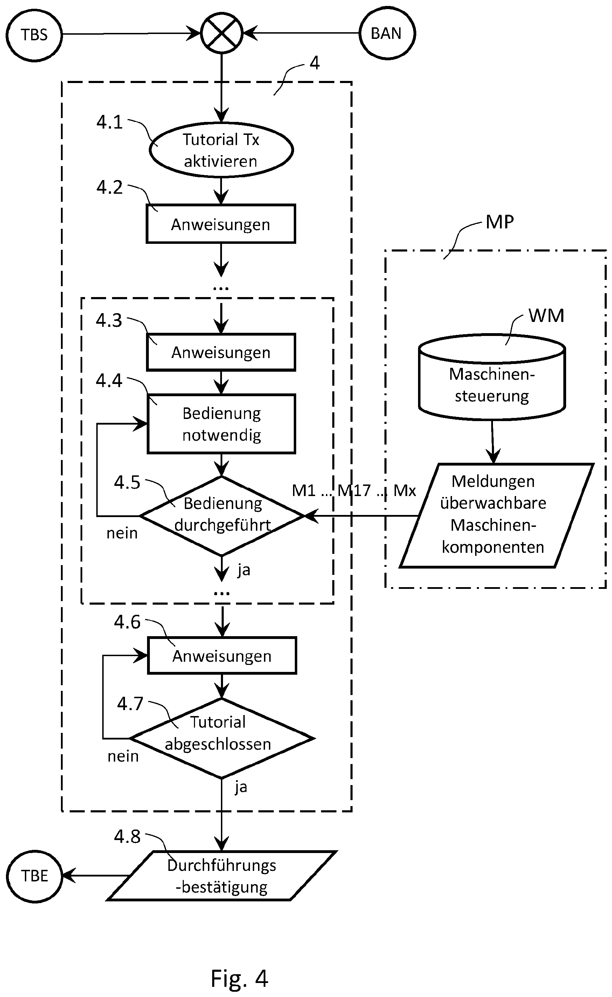

Die Erfindung wird nachfolgend am Beispiel der Figuren 3 und 4 erläutert. Dabei zeigt Fig. 3 ein im Vergleich zu Fig. 2 um ein Ablaufschema 3 für ein Unterprogramm erweitertes beispielhaftes Programmablaufschema 2, worin zusätzlich die erfindungsgemäße Durchführung eines Tutorials durch einen Benutzer und die von der Werkzeugmaschine selbst initialisierte automatische Durchführungsüberwachung sowie Aktualisierung der Benutzerdatei in der zentralen Benutzerverwaltung ZB veranschaulicht sind. In Fig. 4 ist eine weitere vorteilhafte Ausführung der Erfindung veranschaulicht, bei der zur Überwachung der Durchführung eines Tutorials zusätzlich signaltechnische Rückmeldungen von überwachbaren Maschinenkomponenten, die bedienbaren Maschinenkomponenten zugeordnet sind, berücksichtigt werden.

Fig. 3 zeigt ein beispielhaftes Ablaufschema für ein Unterprogramm, das z.B. in einer Verarbeitungseinheit der Werkzeugmaschine ausgeführt werden kann, um einem Anmelder im Falle einer mangelnden Berechtigungsstufe die Durchführung einer Bedienungsunterweisung zu ermöglichen. Hierzu weist das Programmablaufschema 2 ein zusätzliches Ablaufschema 3 für ein Unterprogramm "Tutorialabfrage - Aktualisierung Berechtigungsstufe" mit den beispielhaften Programmschritten 3.1 bis 3.3 auf.

Im Beispiel der Fig. 3 führt die Überprüfung der vom Benutzer angeforderten Bedienungen im Programmschritt 2.4 nicht zu einer Ablehnung des Benutzers. Gemäß einer vorteilhaften Weiterbildung der Erfindung wird vielmehr zunächst im Programmschritt 3.1 durch Abfrage einer Tutorialbibliothek WT in der Verarbeitungseinheit WV der Werkzugmaschine W1 ein Tutorial T1...T9...Tx bestimmt, das geeignet ist, den Mangel in der Berechtigungsstufe des Benutzers zu beheben. Dieses Tutorials kann der Benutzer im Programmschritt 3.2 aktivieren und durchführen. Macht er davon keinen Gebrauch, so wird die Benutzung im Programmschritt 2.8 abgelehnt und die Abmeldungsroutine BAB eingeleitet.

Andernfalls wird das Programm "maschinengeführte Bedienungsunterweisung" ("Tutorial")" TBS gestartet und die Durchführung des ausgewählten Tutorials Tx begonnen. Nach einer erfolgreichen Durchführung des Tutorials wird das "Programmende maschinengeführte Bedienungsunterweisung" TBE erreicht. Es kann nun die gewünschte Aktualisierung der Berechtigungsstufe im Programmschritt 3.3 erfolgen, indem aus der Berechtigungsstufendatenbank ZBM die der bedienbaren Maschinenkomponente, welche Gegenstand des Tutorials war, zugeordnete Berechtigungsstufe S abgefragt und an die zentrale Benutzerverwaltung ZB zurückgemeldet wird. Die neue Berechtigungsstufe wird dort der Benutzerdatei ZBB in einem Speicher ZBB1 dem Datensatz ZBBx des Benutzers zugewiesen und steht dem Benutzer zukünftig für Anmeldungen an allen Werkzeugmaschinen Wx im Maschinenpark zur Verfügung.

Gemäß weiteren Ausführungen der Erfindung können weitere Sicherheitselemente vorgesehen sein. So kann es mit einem zusätzlichen Signal 3.4 ermöglicht werden, dass die Aktualisierung der Berechtigungsstufe selbst nach einer erfolgreichen Durchführung eines Tutorials erst bei Vorliegen einer zusätzlichen externen Freigabe aktiviert wird. Dieses kann z.B. von einer Aufsichtsperson bereitgestellt werden, nachdem diese z.B. eine Rücksprache mit dem Benutzer vorgenommen hat. Weiterhin kann es mit einem zusätzlichen Signal 3.5 ermöglicht werden, dass der Start der Durchführung eines Tutorials erst bei Vorliegen einer zusätzlichen externen Freigabe aktiviert werden kann. Auch dieses kann z.B. von einer Aufsichtsperson bereitgestellt werden, nachdem diese sich z.B. davon überzeugt hat, dass an der Werkzeugmaschine und bei dem Bediener alle Voraussetzung für eine gefahrlose Durchführung eines Tutorials erfüllt sind.

Fig. 4 zeigt gemäß einer vorteilhaften weiteren Ausführung der Erfindung ein beispielhaftes Ablaufschema 4 für ein weiteres Unterprogramm, das in der Verarbeitungseinheit der Werkzeugmaschine des Maschinenparks bei der Durchführung einer Bedienungsunterweisung zusätzlich ausgeführt werden kann. Dieses ermöglicht eine zusätzlich Berücksichtigung von signaltechnischen Rückmeldungen überwachbarer Maschinenkomponenten bei der Durchführungsüberwachung eines Tutorials.

Hierzu weist das in Fig. 4 dargestellt Ablaufschema 4 des Unterprogramms "Tutorialdurchführung" die beispielhaften Programmschritte 4.1 bis 4.8 auf. Dabei wird nach dem Start des Programms 4 "maschinengeführte Bedienungsunterweisung" ("Tutorialdurchführung") TBS im Programmschritt 4.1 das ausgewählte Tutorial Tx aktiviert und dem Benutzer im folgenden Programmschritt 4.2 die dazugehörigen Anweisungen gegeben. Bei Anweisungen, die eine Ausführung von bedienbaren Maschinenkomponenten Bx erfordern, denen eine überwachbare Maschinenkomponente Mx zugeordnet ist, kann besonders vorteilhaft eine signaltechnische Rückmeldung der Maschinenkomponente Mx zusätzlich herangezogen werden, um sicherzustellen, dass deren Bedienung vom Benutzer auch tatsächlich durchgeführt worden ist.

Bei dem Unterprogrammablaufschema in Fig. 4 ist dies durch die Anweisungen im Programmschritt 4.3 symbolisiert, die den Benutzer auf zumindest eine oder auch mehrere Bedienungen an der Maschine im Programmschritt 4.4 hinweisen. Deren Durchführung wird im Programmschritt 4.5 abgefragt, und der Benutzer im Falle einer nicht erfolgten oder fehlgeschlagenen Bedienung zum Programmschritt 4.4 rückgeführt. Wird eine erfolgreiche Durchführung der jeweils notwendigen Bedienung detektiert, so kann das Tutorial durch Bearbeitung weiterer Anweisungen, symbolisiert durch den Programmschritt 4.6, fortgeführt werden. Hierzu werden erfindungsgemäß signaltechnische Rückmeldungen von den überwachbaren Maschinenkomponenten M1 ... M17 ... Mx der Maschinensteuerung WM detektiert, die entsprechend dem Beispiel der Tabelle 1 den bedienbaren Maschinenkomponenten B0 ... B16 ... Bx zugeordnet sind. Dies ist in der Fig. 4 rechts im Feld Maschinenpark MP dargestellt. Kann eine vollständige Durchführung des Tutorials im Programmschritt 4.7 detektiert und im Programmschritt 4.7 signaltechnisch bestätigt werden, wird das Programmende der "maschinengeführten Bedienungsunterweisung" TBE erreicht. Der Programmablauf kann im Unterprogrammablaufschema 3 in Fig. 3 fortgesetzt werden.

Fig. 5 zeigt einen beispielhaften Satz an Bildschirmanzeigen 1. bis 4., die einem Bediener bei der Bearbeitung des Tutorials T1 "Maschinensicherheit" insbesondere auf einem Bediengerät einer Drehmaschine angezeigt werden. Vorteilhaft kann hierzu auf dem Bediengerät, z.B. einem als zentrales User-Interface der Werkzeugmaschine dienenden Touchdisplay, auf eine separate Bedienoberfläche umgeschaltet werden, die für eine gefahrlose Durchführung eines Tutorials eine virtuelle Abbildung der Werkzeugmaschine, d.h. eine virtuelle Maschine, zur Verfügung stellt.

In Fig. 5 wird im dem virtuellen Abbild der Maschine durch langgestreckte Pfeile auf die jeweils zu bedienenden realen Maschinenkomponenten gezeigt. So erfordert die Durchführung des Tutorials T1 eine sukzessive Bedienung der Maschinenkomponenten B0, B1, B3 und B1, so wie dies in Tabelle 2 dargestellt ist. In der Bildschirmanzeige 1. "Maschine einschalten (B0)" wird auf den Stromversorgungsschalter der Maschine gezeigt. In der Bildschirmanzeige 2. "Futterschutzhaube schließen (B1)" wird auf die in der geschlossenen Stellung befindliche Futterschutzhaube der Maschine gezeigt. In der Bildschirmanzeige 3. "Schalten Sie die Hauptspindel ein (B3)" wird auf den Spindelwahlschalter der Maschine gezeigt. In der Bildschirmanzeige 4. "Futterschutzhaube öffnen (B1)" wird auf die in der geöffneten Stellung befindliche Futterschutzhaube der Maschine gezeigt. Werden alle diese Bedienungen von einem Benutzer durchgeführt, und deren Durchführung vorteilhaft durch eine eventuelle zusätzliche Auswertung entsprechender Rückmeldungssignale der zugeordneten überwachbaren Maschinenkomponenten M1, M2, M4 und M1 detektiert, ist das Tutorial T1 vom Bediener erfolgreich durchgeführt worden.

Fig. 6 zeigt einen beispielhaften Satz an Bildschirmanzeigen 1. bis 4., die einem Bediener bei der Bearbeitung des Tutorials T2 "Maschinenbedienung" insbesondere auf einem Bediengerät einer Drehmaschine angezeigt werden. Auch dabei wird in einem virtuellen Abbild der Maschine durch langestreckte Pfeile auf die jeweils zu bedienenden realen Maschinenkomponenten gezeigt.

So erfordert das Tutorial T2 eine sukzessive Bedienung der Maschinenkomponenten B0, B1, B8 (oder B9 oder B10) und B3, wie dies in Tabelle 2 dargestellt ist. In der Bildschirmanzeige 1. "Maschine einschalten (B0)" wird auf den Stromversorgungsschalter der Maschine gezeigt. In der Bildschirmanzeige 2. "Futterschutzhaube schließen (B1)" wird auf die in der geschlossenen Stellung befindliche Futterschutzhaube der Maschine gezeigt. In der Bildschirmanzeige 3. "Verfahren Sie einen Schlitten, z.B. den Bett-, Ober- oder Planschlitten (B8, B9, B10)" wird z.B. auf das Handrad am Bettschlitten der Maschine gezeigt. In der Bildschirmanzeige 4. "Schalten Sie die Hauptspindel ein (B3)" wird auf den Spindelwahlschalter der Maschine gezeigt. Werden diese Bedienungen von einem Benutzer durchgeführt und deren Durchführung vorteilhaft durch eine eventuelle zusätzliche Detektion von Rückmeldungssignalen der zugeordneten überwachbaren Maschinenkomponenten M1, M2, M9 (bzw. M10, M11) und M1 überwacht, ist das Tutorial T2 vom Bediener abgeschlossen.

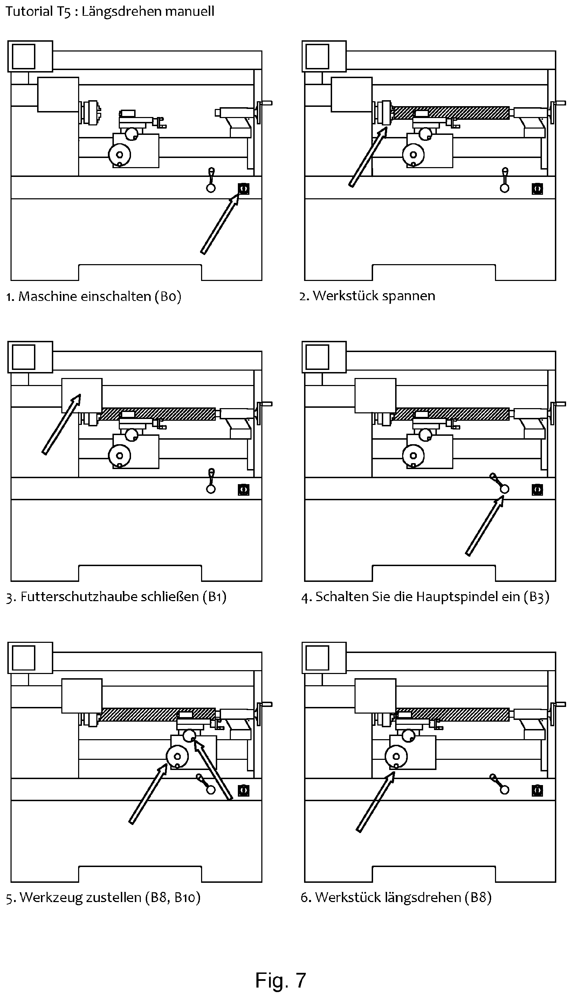

Fig. 7 zeigt einen beispielhaften Satz an Bildschirmanzeigen 1. bis 6., die einem Bediener bei der Bearbeitung des Tutorials T5 "Längsdrehen manuell" z.B. auf einem Bediengerät einer Drehmaschine angezeigt werden. Auch dabei wird in einem virtuellen Abbild der Maschine durch langestreckte Pfeile auf die jeweils zu bedienenden realen Maschinenkomponenten gezeigt. So erfordert das Tutorial T5 eine sukzessive Bedienung der Maschinenkomponenten B0, B1, B3, B8, B10 und B8, wie dies in Tabelle 2 dargestellt ist.

In der Bildschirmanzeige 1. "Maschine einschalten (B0)" wird auf den Stromversorgungsschalter der Maschine gezeigt. In der Bildschirmanzeige 2. "Werkstück spannen" wird auf die Spindel der Maschine gezeigt. Ein Werkstück z.B. in Form eines langestreckten Zylinders ist schraffiert symbolisch dargestellt. In der Bildschirmanzeige 3. "Futterschutzhaube schließen (B1)" wird auf die in der geschlossenen Stellung befindliche Futterschutzhaube der Maschine gezeigt. In der Bildschirmanzeige 4. "Schalten Sie die Hauptspindel ein (B3)" wird auf den Spindelwahlschalter der Maschine gezeigt. In der Bildschirmanzeige 5. "Werkzeug zustellen (B8, B10)" wird auf die Handräder am Bett- und Planschlitten der Maschine gezeigt. Durch deren Betätigung können die Schlitten positioniert werden, so dass sich das Werkzeug in der gewünschten Startposition zu Beginn einer Längsbearbeitung des Werkstücks befindet. In der Bildschirmanzeige 6. "Werkstück längsdrehen (B8)" wird auf das Handrad des am Ende der Bearbeitung befindlichen Bettschlittens der Maschine gezeigt. Dieser befinden sich dann am linken Ende des Maschinenbetts vor der Spindel.

Im Beispiel der Fig. 7 ist der Bedienschritt "Werkstück spannen" in der Bildschirmanzeige 2 nicht signaltechnisch überwachbar. Werden alle übrigen Bedienungen von einem Benutzer durchgeführt und deren Durchführung vorteilhaft durch eine eventuelle zusätzliche Auswertung entsprechender Rückmeldungssignale der zugeordneten überwachbaren Maschinenkomponenten M1, M2, M4, M9, M11 und M9 detektiert, ist das Tutorial T5 vom Bediener erfolgreich durchgeführt worden.

Gemäß einer vorstehend bereits erläuterten weiteren Ausführung der Erfindung können auch bei den in den Figuren 5 bis 7 dargestellten Bearbeitungen der Tutorials T1, T2 und T5 die dabei von einem Benutzer am Bediengerät vorgenommenen Bedienungen überwacht und damit eine ordnungsgemäße Bearbeitung des jeweiligen Tutorials detektiert werden. So kann im Beispiel der Fig. 5 eine aufeinanderfolgende Aktivierung der als Bedienmittel dienenden Bildschirmanzeigen 1., 2., 3. und 4. überwacht und als Bestätigung für eine vollständige Durchführung des Tutorials T1 herangezogen werden. Erfordert die Durchführung des Tutorials T1 von einem Bediener die Aktivierung von weiteren Bildschirmmasken, die z.B. erläuternde Texte und Grafiken enthalten, so kann auch deren ordnungsgemäße Aktivierung zur Überwachung der vollständigen Durchführung des Tutorials T1 mit herangezogen werden.

### Bezugszeichenliste

- MP: Maschinenpark
- Wx: Werkzeugmaschinen eines Maschinenparks
- W1: Werkzeugmaschine, insbesondere Dreh- und/oder Fräsmaschinen
- Bx: bedienbare Maschinenkomponenten
- B0 ... B16: beispielhafte bedienbare Maschinenkomponenten
- WB: Bedienoberfläche, z.B. eine Touchpanel, an der Maschinensteuerung zur Eingabe von Benutzer- und Werkstückdaten
- WV: Verarbeitungseinheit
- BAN: Programmstart Benutzeranmeldung
- BAB: Programmende Benutzerabmeldung
- TBS: Programmstart maschinengeführte Bedienungsunterweisung
- TBE: Programmende maschinengeführte Bedienungsunterweisung
- Tx: maschinengeführte Bedienungsunterweisungen ("Tutorials")
- T1...T9: beispielhafte maschinengeführte Bedienungsunterweisungen
- WT: Bibliothek mit maschinengeführten Bedienungsunterweisungen
- WM: Maschinensteuerung
- Mx: überwachbare Maschinenkomponenten
- M1 ... M17: beispielhafte überwachbare Maschinenkomponenten
- DN: Datennetzwerk zur Verkopplung der Werkzeugmaschinen und zentralen Benutzerverwaltung
- ZB: zentrale Benutzerverwaltung
- ZBM: Berechtigungsstufendatei der bedienbaren Maschinenkomponenten
- ZBM+: lokale Kopien der Berechtigungsstufendatei in den Werkzeugmaschinen
- S: Berechtigungsstufen
- 1...6: beispielhafte Berechtigungsstufen
- ZBB: Benutzerdatei der zugelassenen Benutzer
- ZBB+: lokale Kopien der Benutzerdatei in den Werkzeugmaschinen
- ZBBx: ein beispielhafter Benutzerdatensatz
- ZBB1: Speicher mit aktueller Berechtigungsstufe des Benutzers
- ZBB2: Speicher mit der aktuellen Gültigkeitsdauer der aktuellen Berechtigungsstufe des Benutzers
- ZBB3: Speicher mit Verzeichnis der vom Benutzer absolvierten maschinengeführten Bedienungsunterweisung ("Tutorialarchiv")
- 2: Programmablaufschema "Benutzeranmeldung - Benutzerabmeldung"
- 2.1 bis 2.8: einzelne Programmschritte
- 3: Ablaufschema des Unterprogramms "Tutorialabfrage - Aktualisierung Berechtigungsstufe"
- 3.1 ... 3.3: Programmschritte
- 3.4: Freigabesignal manuell
- 3.5: Freigabesignal Sicherheitsschlüsselschalter
- 4: Ablaufschema des Unterprogramms "Tutorialdurchführung"
- 4.1 ... 4.8: Programmschritte

## Patentansprüche

1. Verfahren zur Verwaltung der Benutzer von datentechnisch vernetzten Werkzeugmaschinen (Wx), insbesondere von Dreh- und/oder Fräsmaschinen, eines Maschinenparks (MP), mit
- einer zentralen Benutzerverwaltung (ZB) zur
- Zuordnung zumindest einer Berechtigungsstufe (S) zu den bedienbaren Maschinenkomponenten (Bx) der Werkzeugmaschinen (Wx) und zur
- Zuweisung einer Berechtigungsstufe (S) an zugelassene Benutzer der Werkzeugmaschinen des Maschinenparks, und wobei
- die Werkzeugmaschinen (Wx)
- zumindest eine Bedienungsunterweisung ("Tutorial") (Tx) für eine bedienbare Maschinenkomponente (Bx) der jeweiligen Werkzeugmaschine (Wx) aufweisen, sowie
- eine vollständige Durchführung einer Bedienungsunterweisung (Tx) durch einen an der jeweiligen Werkzeugmaschine (Wx) angemeldeten Benutzer automatisch überwachen und
- an die zentrale Benutzerverwaltung (ZB) melden, so dass dort zur Aktualisierung die Berechtigungsstufe (S), welche der bedienbaren Maschinenkomponente (Bx) der durchgeführten Bedienungsunterweisung (Tx) zugeordnet ist, dem angemeldeten Benutzer zugewiesen wird.

2. Verfahren nach Anspruch 1, wobei von der zentralen Benutzerverwaltung (ZB)
eine Zuweisung einer Berechtigungsstufe (S) an den angemeldeten Benutzer bei der Aktualisierung in der zentralen Benutzerverwaltung (ZB) abhängig von einem zusätzlichen Freigabesignal (3.4) vorgenommen wird, insbesondere von einer autorisierten Person.

3. Verfahren nach Anspruch 1 oder 2, wobei
- die Berechtigungstufen (S) derart gegliedert sind (Tabelle 2), dass
eine höhere Berichtigungsstufe (S,2) zusätzlich zu den mindestens einen bedienbaren Maschinenkomponenten (B13), welche dieser Berechtigungsstufe (S,2) zugeordnet ist, auch bedienbare Maschinenkomponenten (B0) umfasst, die einer oder mehreren niedrigeren Berechtigungsstufen (1) zugeordnet sind, und
- die zentrale Benutzerverwaltung bei einer Aktualisierung
die dem angemeldeten Benutzer zugewiesene Berechtigungsstufe durch die höhere Berechtigungsstufe ersetzt ("hochstuft'), welche der bedienbaren Maschinenkomponente der durchgeführten Bedienungsunterweisung ("Tutorial") (T3) zugeordnet ist.

4. Verfahren nach Anspruch 1, 2 oder 3, wobei eine Werkzeugmaschine (Wx)
- die einem angemeldeten Benutzer zugewiesene Berechtigungsstufe (S.2) von der zentralen Benutzerverwaltung (ZB) ausliest (2.3) und
- die zumindest eine bedienbare Maschinenkomponente (B13) der Werkzeugmaschine (Wx) freischaltet, die von der dem angemeldeten Benutzer zugewiesenen Berechtigungsstufe (S.2) umfasst ist.

5. Anordnung zur Benutzerverwaltung von Werkzeugmaschinen (Wx) eines Maschinenparks (MP) mit einem Datennetzwerk (DN) zumindest aus einer elektronischen Vorrichtung zur zentralen Benutzerverwaltung (ZB) und datentechnisch verbundenen Werkzeugmaschinen (Wx), wobei
- die zentrale Benutzerverwaltung (ZB) aufweist zumindest einen Speicher für
- eine Berechtigungsstufendatei (ZBM) mit den bedienbaren Maschinenkomponenten (Bx) der Werkzeugmaschinen (Wx), denen jeweils zumindest eine Berechtigungsstufe (S) zugeordnet ist,
- eine Benutzerdatei (ZBB) mit den zugelassenen Benutzern für die Werkzeugmaschine des Maschinenparks, denen jeweils eine Berechtigungsstufe (S) zugewiesen ist, und
- eine Werkzeugmaschine (Wx) jeweils aufweist
- einen Speicher (WT) für zumindest eine Bedienungsunterweisung ("Tutorial") (Tx) für zumindest eine bedienbare Maschinenkomponente (Bx) der jeweiligen Werkzeugmaschine (Wx) und
- eine Verarbeitungseinheit (WV) mit Mitteln zur
- Anmeldung eines Benutzers an der Werkzeugmaschine (Wx),
- Überwachung der vollständigen Durchführung einer Bedienungsunterweisung (Tx) durch den angemeldeten Benutzer und
- Meldung der vollständigen Durchführung der Bedienungsunterweisung (Tx) an die zentrale Benutzerverwaltung (ZB) zur Aktualisierung der Benutzerdatei (ZBB), wobei dort die Berechtigungsstufe (S), welche der bedienbaren Maschinenkomponente (Bx) der durchgeführten Bedienungsunterweisung (Tx) zugeordnete ist, dem angemeldeten Benutzer zugewiesen wird.

6. Anordnung nach Anspruch 5, wobei insbesondere die Verarbeitungseinheit (WV) einer Werkzeugmaschine (Wx)
zur Überwachung der Durchführung einer Bedienungsunterweisung ("Tutorial") (Tx) durch den angemeldeten Benutzer Mittel aufweist, welche die Aktivierung von Bedienmitteln (WB) der Werkzeugmaschine (Wx) durch den angemeldeten Benutzer auswertet, insbesondere die Bedienung eines Touchdisplays.

7. Anordnung nach Anspruch 5 oder 6, wobei insbesondere die Verarbeitungseinheit (WV) einer Werkzeugmaschine (Wx)
zur Überwachung der Durchführung einer Bedienungsunterweisung ("Tutorial") (Tx) durch den angemeldeten Benutzer Mittel aufweist, welche eine signaltechnische Rückmeldung von einer überwachbaren Maschinenkomponente (Mx), die einer bedienbaren Maschinenkomponente (Bx) zugeordnet ist, an die Verarbeitungseinheit (WV) übertragen, wenn eine Bedienung der bedienbaren Maschinenkomponente (Bx) bei der Bedienungsunterweisung ("Tutorial") (Tx) detektiert wird.

8. Anordnung nach Anspruch 5, 6 oder 7, wobei eine Werkzeugmaschine (Wx) aufweist
- Mittel zur Auslesung der zugewiesenen Berechtigungsstufe (S) des angemeldeten Benutzers von der zentralen Benutzerverwaltung (ZB) und
- Mittel zur Freischaltung der zumindest einen bedienbaren Maschinenkomponente (Bx) der Werkzeugmaschine, die von der dem Benutzer zugewiesenen Berechtigungsstufe (S) umfasst ist.

9. Anordnung nach einem der vorangegangenen Ansprüche 5 bis 8, wobei der Maschinenpark (MP)
datentechnisch verbundene Drehmaschinen (W1), insbesondere konventionelle Drehmaschinen, als Werkzeugmaschinen (Wx) aufweist.

10. Anordnung nach einem der vorangegangenen Ansprüche 5 bis 9, wobei der Maschinenpark (MP)
datentechnisch verbundene Fräsmaschinen (W1) als Werkzeugmaschinen (Wx) aufweist.

11. Anordnung nach einem der vorangegangenen Ansprüche 5 bis 9, wobei die Werkzeugmaschinen (Wx)
- eine Kopie der Benutzerdatei (ZBB+) mit den zugelassenen Benutzern für die Werkzeugmaschinen (Wx) des Maschinenparks (MP) und den jeweils zugewiesenen Berechtigungsstufen (S) aufweisen, und
- die einem an einer Werkzeugmaschine (Wx) angemeldeten Benutzer zugewiesene Berechtigungsstufe (S) aus der Kopie der Benutzerdatei (ZBB+) auslesen.

12. Anordnung nach Anspruch 11, wobei die zentrale Benutzerverwaltung (ZB)
die Kopien der Benutzerdateien (ZBB+) auf den Werkzeugmaschinen (Wx) des Maschinenparks (MP) nach einer Aktualisierung der Benutzerdatei (ZBB) in der zentralen Benutzerverwaltung (ZB) überschreibt.

13. Anordnung nach einem der vorangegangenen Ansprüche 5 bis 12, wobei die Werkzeugmaschinen (Wx)
- eine Kopie der Berechtigungsstufendatei (ZBM+) mit den bedienbaren Maschinenkomponenten (Bx) für die jeweilige Werkzeugmaschine und den jeweils zugeordneten Berechtigungsstufen (S) aufweisen, und
- die bedienbaren Maschinenkomponenten (Bx) der Werkzeugmaschine, die von der einem angemeldeten Benutzer zugewiesenen Berechtigungsstufe (S) umfasst sind, aus der Kopie der Berechtigungsstufendatei (ZBM+) auslesen und freischalten.

14. Anordnung nach Anspruch 13, wobei die zentrale Benutzerverwaltung (ZB)
die Kopien der Berechtigungsstufendatei (ZBM+) auf den Werkzeugmaschinen (Wx) des Maschinenparks (MP) nach einer Aktualisierung der Berechtigungsstufendatei (ZBB) in der zentralen Benutzerverwaltung (ZB) überschreibt.

## Claims

1. Method for managing the users of data networked machine tools (Wx), in particular lathes and/or milling machines, of a machine park (MP), with
- a central user management (ZB) for
- assigning at least one authorization level (S) to the operable machine components (Bx) of the machine tools (Wx) and for
- assigning an authorization level (S) to authorized users of the machine tools of the machine park, and wherein
- the machine tools (Wx)
- comprise at least one operating instruction ("tutorial") (Tx) for an operable machine component (Bx) of the respective machine tool (Wx), and
- automatically monitor a complete execution of an operating instruction (Tx) by a user logged in at a respective machine tool (Wx), and
- report to the central user management (ZB), so that there, for updating, the authorization level (S), which is assigned to the operable machine component (Bx) of the executed operating instruction (Tx), is assigned to the logged-in user.

2. Method according to claim 1, wherein the central user management (ZB)
carries out an assignment of an authorization level (S) to the logged-in user while updating the central user management (ZB) depending on an additional clearance signal (3.4), in particular from an authorized person.

3. Method according to claim 1 or 2, wherein
- the authorization levels (S) are structured in such manner (table 2), that
a higher authorization level (S,2), in addition to the at least one operable machine components (B13), which is assigned to this authorization level (S,2), also comprises operable machine components (B0), which are assigned to one or more lower authorization levels (1), and
- the central user management (ZB), when updating,
replaces ("upgrades") the authorization level assigned to the logged-in user with the higher authorization level, which is assigned to the operable machine component of the executed operating instruction ("tutorial").

4. Method according to claim 1, 2 or 3, wherein the machine tool (Wx)
- reads (2.3) the authorization level (S.2) assigned to the logged-in user from the central user management (ZB) and
- unlocks the at least one operable machine component (B13) of the machine tool (Wx), which is contained by the authorization level (S.2) assigned to the logged-in user.

5. Arrangement for user management of machine tools (Wx) of a machine park (MP) with a data network (DN) consisting of at least one electronic device for central user management (ZB) and data-connected machine tools (Wx), wherein
- the central user management (ZB) contains at least one memory for
- an authorization level file (ZBM) with the machine components (Bx) of the machine tools (Wx), each of which is assigned at least one authorization level (S),
- a user file (ZBB) with the authorized users for the machine tool in the machine park, each of whom is assigned an authorization level (S), and
- a machine tool (Wx) respectively contains
- a memory (WT) for at least one operating instruction ("tutorial") (Tx) for at least one operable machine component (Bx) of the respective machine tool (Wx) and
- a processing unit (WV) with means for
- logging-in a user at the machine tool (Wx),
- monitoring a complete execution of an operating instruction (Tx) by the logged-in user and
- reporting the complete execution of the operating instruction (Tx) to the central user management (ZB) for updating the user file (ZBB), wherein there, the authorization level (s), which is assigned to the operable machine component (Bx) of the executed operating instruction (Tx), is assigned to the logged-in user.

6. Arrangement according to claim 5, wherein in particular the processing unit (WV) of the machine tool (Wx)
for monitoring the execution of an operating instruction ("tutorial") (Tx) by the logged-in user contains means, which evaluate the activation of operating means (WB) of the machine tool (Wx) by the logged-in user, in particular the operation of a touch display.

7. Arrangement according to claim 5 or 6, wherein in particular the processing unit (WV) of the machine tool (Wx)
for monitoring the execution of an operating instruction ("tutorial") (Tx) by the logged-in user contains means, which transmit a signal-based feedback of a monitorable machine component (Mx), which is assigned to an operable machine component (Bx), to the processing unit (WV), if an operation of the operable machine component (Bx) during the operating instruction ("tutorial") (Tx) is detected.

8. Arrangement according to claims 5, 6 or 7, wherein the machine tool (Wx) contains
- means for reading the assigned authorization level (S) of the logged-in user from the central user management (ZB) and
- means for unlocking the at least one operable machine component (Bx) of the machine tool, which is contained by the authorization level (S) assigned to the user.

9. Arrangement according to one of the preceding claims 5 to 8, wherein the machine park (MP)
contains data-connected lathes (W1), in particular conventional lathes, as machine tools (Wx).

10. Arrangement according to one of the preceding claims 5 to 9, wherein the machine park (MP)
contains data-connected milling machines (W1 as machine tools (Wx).

11. Arrangement according to one of the preceding claims 5 to 9, wherein the machine tools (Wx)
- contain a copy of the user file (ZBB+) with the authorized users for the machine tools (Wx) of the machine park (MP) and the respectively assigned authorization levels (S), and
- read the authorization level (S) assigned to the user logged-in at the machine tool (Wx) from the copy of the user file (ZBB+).

12. Arrangement according to claim 11, wherein the central user management (ZB)
overwrites the copies of the user files (ZBB+) on the machine tools (Wx) of the machine park (MP) after an update of the user file (ZBB) on the central user management (ZB).

13. Arrangement according to one of the preceding claims 5 to 12, wherein the machine tools (Wx)
- contain a copy of the authorization level file (ZBM+) with the operable machine components (Bx) for the respective machine tool and the respectively assigned authorization levels (S), and
- read the operable machine components (Bx) of the machine tool, which are contained in an authorization level (S) assigned to a logged-in user from the copy of the authorization level file (ZBM+) and unlock them.

14. Arrangement according to claim 13, wherein the central user management (ZB)
overwrites the copies of the authorization level files (ZBM+) on the machine tools (Wx) of the machine park (MP) after an update of the authorization level file (ZBM) in the central user management (ZB).

## Revendications

1. Procédé permettant la gestion des utilisateurs de machines-outils (Wx) mises en réseau par des techniques de données, en particulier des utilisateurs de machines de tournage et/ou de fraisage, d'un parc de machines (MP), comportant
- une gestion centralisée des utilisateurs (ZB) pour
- l'affectation d'au moins un niveau d'autorisation (S) aux composants de machine (Bx) commandables des machines-outils (Wx) et pour
- l'attribution d'un niveau d'autorisation (S) à des utilisateurs autorisés des machines-outils du parc de machines, et dans lequel
- les machines-outils (Wx)
- présentent au moins une formation à la commande (« Tutorial ») (Tx) pour un composant de machine (Bx) commandables de la machine-outil (Wx) respective, et
- surveillent automatiquement la réalisation complète d'une formation à la commande (Tx) par un utilisateur connecté à la machine-outil (Wx) respective, et
- se connectent à la gestion centralisée des utilisateurs (ZB), en sorte que le niveau d'autorisation (S) affecté au composant de machine (Bx) commandable de la formation à la commande (Tx) effectuée y soit attribué à l'utilisateur connecté pour la mise à jour.

2. Procédé selon la revendication 1, dans lequel, à partir de la gestion centralisée des utilisateurs (ZB),
une attribution d'un niveau d'autorisation (S) à l'utilisateur connecté est effectuée lors de la mise à jour dans la gestion centralisée des utilisateurs (ZB) en fonction d'un signal de validation (3.4) supplémentaire, en particulier par une personne autorisée.

3. Procédé selon la revendication 1 ou 2, dans lequel
- les niveaux d'autorisation (S) sont structurés (tableau 2) de telle sorte
qu'un niveau d'autorisation supérieur (S.2) comprend, en plus de l'au moins un composant de machine (B13) commandable, lequel est affecté à ce niveau d'autorisation (5.2), également des composants de machine (B0) commandables, lesquels sont affectés à un ou plusieurs niveaux d'autorisation inférieurs (1), et
- que, lors d'une mise à jour, la gestion centralisée des utilisateurs
remplace le niveau d'autorisation attribué à l'utilisateur connecté par le niveau d'autorisation supérieur (« de niveau supérieur ») affecté au composant machine commandable de la formation à la commande (« Tutorial ») (T3) exécutée.

4. Procédé selon la revendication 1, 2 ou 3, dans lequel une machine-outil (Wx)
- lit (2.3) le niveau d'autorisation (S.2) attribué à un utilisateur connecté à partir de la gestion centralisée des utilisateurs (ZB) et
- active l'au moins un composant de machine (B13) commandable de la machine-outil (Wx), lequel composant de machine est compris par le niveau d'autorisation (S.2) attribué à l'utilisateur connecté.

5. Agencement pour la gestion des utilisateurs de machines-outils (Wx) d'un parc de machines (MP) comportant un réseau de données (DN) constitué au moins d'un dispositif électronique pour la gestion centralisée des utilisateurs (ZB) et de machines-outils (Wx) reliées par des techniques de données, dans lequel
- la gestion centralisée des utilisateurs (ZB) présente au moins une mémoire pour
- un fichier de niveaux d'autorisation (ZBM) comportant les composants de machine (Bx) commandables des machines-outils (Wx), composants de machine auxquels est affecté respectivement au moins un niveau d'autorisation (S),
- un fichier d'utilisateurs (ZBB) comportant les utilisateurs autorisés pour la machine-outil du parc de machines, utilisateurs autorisés à chacun desquels est attribué un niveau d'autorisation (S), et
- une machine-outil (Wx) présente respectivement
- une mémoire (WT) pour au moins une formation à la commande (« Tutorial ») (Tx) pour au moins un composant de machine (Bx) commandable de la machine-outil (Wx) respective et
- une unité de traitement (WV) comportant des moyens pour
- la connexion d'un utilisateur à la machine-outil (Wx),
- la surveillance de la réalisation complète d'une formation à la commande (Tx) par l'utilisateur connecté et
- la notification de la réalisation complète de la formation à la commande (Tx) à la gestion centralisée des utilisateurs (ZB) pour la mise à jour du fichier d'utilisateurs (ZBB), dans lequel le niveau d'autorisation (S) qui est affecté au composant de machine (Bx) commandable de la formation à la commande (Tx) effectuée y est attribué à l'utilisateur connecté.

6. Agencement selon la revendication 5, dans lequel en particulier l'unité de traitement (WV) d'une machine-outil (Wx)
présente des moyens permettant de surveiller la réalisation d'une formation à la commande (« Tutorial ») (Tx) par l'utilisateur connecté, lesquels moyens évaluent l'activation de moyens de commande (WB) de la machine-outil (Wx) par l'utilisateur connecté, en particulier la commande d'un écran tactile.

7. Agencement selon la revendication 5 ou 6, dans lequel en particulier l'unité de traitement (WV) d'une machine-outil (Wx)
présente des moyens permettant de surveiller la réalisation d'une formation à la commande (« Tutorial ») (Tx) par l'utilisateur connecté, lesquels moyens transmettent à l'unité de traitement (WV) une rétroaction technique de signal provenant d'un composant de machine (Mx) pouvant être surveillé, lequel composant de machine est affecté à un composant de machine (Bx) commandable, lorsqu'une commande du composant de machine (Bx) commandable est détectée lors de la formation à la commande (« Tutorial ») (Tx).

8. Agencement selon la revendication 5, 6 ou 7, dans lequel une machine-outil (Wx) présente
- des moyens permettant à la gestion centralisée des utilisateurs (ZB) de lire le niveau d'autorisation (S) attribué de l'utilisateur connecté et
- des moyens permettant l'activation de l'au moins un composant de machine (Bx) commandable de la machine-outil, lequel composant de machine est compris par le niveau d'autorisation (S) attribué à l'utilisateur.

9. Agencement selon l'une des revendications 5 à 8 précédentes, dans lequel le parc de machines (MP) présente
des machines de tournage (W1) reliés par des techniques de données, en particulier des machines de tournage conventionnelles, en tant que machines-outils (Wx).

10. Agencement selon l'une des revendications 5 à 9 précédentes, dans lequel le parc de machines (MP) présente
des machines de fraisage (W1) reliées, par des techniques de données, en tant que machines-outils (Wx).

11. Agencement selon l'une des revendications 5 à 9 précédentes, dans lequel les machines-outils (Wx)
- présentent une copie du fichier utilisateur (ZBB+) comportant les utilisateurs autorisés pour les machines-outils (Wx) du parc de machines (MP) et les niveaux d'autorisation (S) qui leur sont respectivement attribués, et
- lisent le niveau d'autorisation (S) attribué à un utilisateur connecté à une machine-outil (Wx) à partir de la copie du fichier utilisateur (ZBB+).

12. Agencement selon la revendication 11, dans lequel la gestion centralisée des utilisateurs (ZB)
écrase les copies des fichiers utilisateur (ZBB+) sur les machines-outils (Wx) du parc de machines (MP) après une mise à jour du fichier utilisateur (ZBB) dans la gestion centralisée des utilisateurs (ZB).

13. Agencement selon l'une des revendications 5 à 12 précédentes, dans lequel les machines-outils (Wx)
- présentent une copie du fichier de niveau d'autorisation (ZBM+) comportant les composants de machine (Bx) commandables pour la machine-outil respective et les niveaux d'autorisation (S) respectivement affectés, et
- lisent et activent, à partir de la copie du fichier de niveau d'autorisation (ZBM+), les composants de machine (Bx) de la machine-outil, lesquels composants de machine sont compris par le niveau d'autorisation (S) attribué à un utilisateur connecté.

14. Agencement selon la revendication 13, dans lequel la gestion centralisée des utilisateurs (ZB)
écrase les copies du fichier de niveau d'autorisation (ZBM+) sur les machines-outils (Wx) du parc de machines (MP) après une mise à jour du fichier de niveau d'autorisation (ZBB) dans la gestion centralisée des utilisateurs (ZB).
